# DEMANDE DE BREVET EUROPEEN

(11) **EP 2 101 153 A1**
(43) Date de publication de la demande: **16.09.2009**
(21) Numéro de dépôt: 09155147.3
(22) Date de dépôt: 13.03.2009
(51) Int. Cl.: G01C 21/36, G08G 1/0968

(54) **Guidage sur un terminal mobile à partir d'objets filmés ou photographiés**

(30) Priorité: 14.03.2008 FR 0801429
(71) Demandeur: Alcatel Lucent, 75008 Paris (FR)
(72) Inventeur: Poupel, Olivier, 35000, Rennes (FR); Osmond, Marin, 35000, Rennes (FR); Saada, Stéphane, 35000, Rennes (FR); Dufosse, Stephane, 91620, Nozay (FR)
(74) Mandataire: Ameline, Jean-Paul B.C.

(57) **Abrégé**

Procédé de communication comprenant les opérations suivantes:
- Établissement d'une session média entre un terminal (**2**) mobile et un système (**3**) de communication distant;
- Réalisation par le terminal (**2**) d'une prise de vue contenant un objet réel situé dans l'environnement du terminal (**2**);
- Transmission de la prise de vue par le terminal (**2**) mobile au système (**3**) de communication au cours de la session média ;
- Réception de la prise de vue par le système (**3**) de communication;
- Analyse de la prise de vue, au sein du système (**3**) de communication;
- Identification par le système (**3**) de l'objet contenu dans la prise de vue ;
- Identification par le système (**3**) d'au moins un lieu associé audit objet ;
- Prise en compte par le système de la localisation du terminal (**2**) ;
- Sélection d'un lieu associé à l'objet en fonction de ladite localisation ;
- Activation d'une procédure de guidage à partir de cette localisation jusqu'au lieu sélectionné.

## Description

L'invention a trait au domaine des télécommunications.

Les technologies de communications de troisième génération (3G) ont permis d'intégrer aux réseaux de mobiles un certain nombre de services multimédia. Grâce par ailleurs à l'augmentation de la puissance des terminaux mobiles, des applications logicielles évoluées peuvent y être implémentées, telle que la navigation par satellite associée à des services interactifs de type informatif ou publicitaire. A titre d'illustration, on pourra notamment se référer à la demande de brevet américain n°US 2008/007399, qui décrit un procédé suivant lequel des informations relatives à un lieu physique donné sont fournies à un terminal mobile localisé par GPS.

Le procédé décrit constitue certes une avancée par rapport aux techniques selon lesquelles l'utilisateur doit introduire l'adresse d'un lieu - ou son identification précise - à la manière d'une saisie sur un annuaire électronique pour obtenir en retour des informations relatives au lieu identifié, ou bien sélectionner un lieu parmi une liste de lieux prédéfinis. Lorsque l'utilisateur souhaite en outre être guidé vers le lieu identifié, il doit valider les coordonnées du lieu et activer les fonctionnalités de guidage du système de navigation du terminal, ce qui s'avère fastidieux à l'usage.

L'invention vise notamment à simplifier les fonctionnalités de guidage dans les systèmes de navigation implémentés sur les terminaux mobiles.

A cet effet, l'invention propose en premier lieu un procédé de communication comprenant les opérations suivantes ;
- Établissement d'une session média entre un terminal mobile et un système de communication distant comprenant une base de données dans laquelle sont mémorisées des images d'objets ;
- Réalisation par le terminal d'une prise de vue dans l'environnement du terminal ;
- Transmission de la prise de vue par le terminal mobile au système de communication au cours de la session média ;
- Réception de la prise de vue par le système de communication ;
- Analyse de la prise de vue, au sein du système de communication, pour y détecter la présence d'un objet dont une image serait disponible dans la base de données ;
- Lorsqu'un objet a été identifié par son image, identification par le système d'au moins un lieu associé audit objet ;
- Prise en compte par le système de la localisation du terminal ;
- Sélection d'un lieu associé à l'objet en fonction de ladite localisation ;
- Activation d'une procédure de guidage à partir de cette localisation jusqu'au lieu sélectionné.

Selon un mode préféré de réalisation, parmi plusieurs lieux associés à l'objet, le lieu sélectionné est le lieu le plus proche de la localisation du terminal.

Il peut être prévu une opération d'activation à distance par le système de communication, dans le terminal, d'une application de navigation d'un système de positionnement par satellite implémenté dans le terminal.

Par ailleurs, on peut prévoir une opération de transmission des coordonnées du lieu sélectionné au terminal.

Quant à la procédure de guidage, elle comprend par exemple une opération d'élaboration d'un trajet reliant la localisation du terminal au lieu sélectionné.

Enfin, on peut prévoir une opération d'affichage dudit trajet sur un écran du terminal.

En deuxième lieu, l'invention propose un système de communication comprenant :
- une base de données contenant une pluralité d'images à chacune desquelles est associé un lieu prédéterminé ;
- un serveur d'applications, relié à la base de données, et configuré pour effectuer une analyse d'image d'une prise de vue reçue d'un terminal mobile en vue d'identifier dans ladite prise de vue un objet réel correspondant à une image mémorisée dans la base de données ;
- un serveur de localisation relié au serveur d'applications, configuré pour activer une procédure de guidage vers le lieu associé à ladite image.

Selon un mode de réalisation, le serveur de localisation est configuré pour activer à distance, dans le terminal, une application de navigation d'un système de positionnement par satellite implémenté dans le terminal.

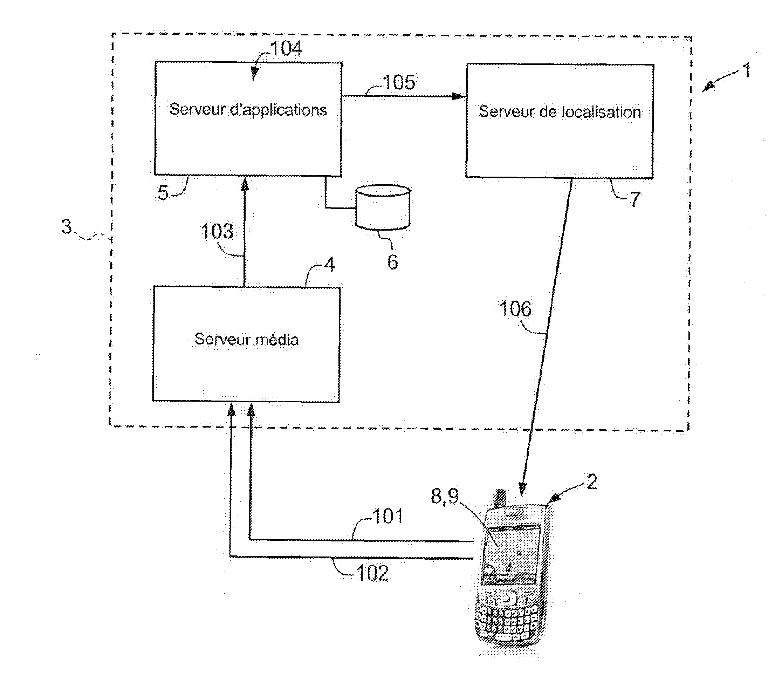

D'autres objets et avantages de l'invention apparaîtront à la lumière de la description faite ci-après en référence au dessin annexé qui illustre un système de communication et un procédé de communication conformes à l'invention.

Sur le dessin est représentée une architecture réseau **1** comprenant un terminal **2** mobile (téléphone mobile, PDA communicant ou Smartphone), relié, via l'interface air, à un système **3** de communication comprenant un serveur média **4,** qui assure l'établissement de sessions médias avec le terminal **2,** un serveur **5** d'applications vidéo, relié au serveur média **4** et sur lequel est implémentée une application de réalité augmentée, une base de données **6** reliée ou intégrée au serveur **5** d'applications vidéo et dans laquelle sont mémorisées des images d'objets et les coordonnées géographiques de lieux associés à ces objets, ainsi qu'un serveur **7** de localisation relié au serveur **5** d'applications vidéo et programmé pour localiser le terminal **2.**

Le serveur média **4** et le terminal mobile **2** sont configurés pour établir entre eux des sessions médias (par exemple suivant le protocole RTP ou H324m), permettant notamment l'échange de données vidéo.

Le terminal mobile **2** est équipé d'une caméra permettant de réaliser des prises de vue (photos, vidéo) de l'environnement du terminal **2.** Le terminal est en outre équipé d'un écran **8** permettant l'affichage d'images et de vidéo, ainsi que d'un système de positionnement (par satellite par exemple) comprenant une application d'aide à la navigation, grâce à laquelle une carte **9** bidimensionnelle ou tridimensionnelle est affichée sur l'écran du terminal **2,** avec la position de celui-ci sur la carte, éventuellement associée à un trajet programmé.

Le système **3** est configuré pour permettre, à partir d'une prise de vue contenant un objet identifiable par le système **3** (monument, commerce, marque, logo), le guidage du terminal **2** vers un lieu associé à cet objet. Cette procédure de guidage peut comprendre l'affichage des coordonnées du lieu sur le terminal, ou le guidage vers le lieu depuis le serveur **7** de localisation.

A cet effet, une session média est tout d'abord établie (**101**), suivant un protocole temps réel (par exemple RTP ou H324m), entre le terminal **2** et le système **3** de communication, et plus précisément entre le terminal **2** (à l'initiative de celui-ci) et le serveur média **4**.

Au cours de la session média établie entre le terminal **2** et le serveur média **4**, une prise de vue (vidéo, photographie) est réalisée à partir du terminal **2**, laquelle prise de vue inclut un objet susceptible d'être identifié par le système **3**. A titre d'exemple, cette prise de vue inclut un logo affiché sur un panneau de publicité.

La prise de vue est transmise (**102**), en temps réel, par le terminal **2** au serveur média **4**.

Dès réception, le serveur média **4** isole la prise de vue et, éventuellement après décompression, la transmet (**103**) au serveur **5** d'applications vidéo pour analyse.

Grâce à sa fonctionnalité de réalité augmentée, le serveur **6** d'applications vidéo effectue alors, en temps réel, une analyse (**104**) de la prise de vue pour y détecter la présence d'un objet dont une image serait disponible dans la base de données **6**.

Par exemple, lorsque la prise de vue est une vidéo, elle est découpée image par image, puis chaque image est comparée avec les images de la base de données **6**, au moyen d'une technique de reconnaissance d'image, telle que la technique des coins de Harris.

Lorsqu'un tel objet a été identifié grâce à son image, le serveur **5** d'applications vidéo extrait de la base de données **6** les coordonnées géographiques du lieu (ou des lieux) associé(s) à cet objet, et les transmet (**105**) au serveur **7** de localisation. Le serveur **7** de localisation prend en compte (par exemple après l'avoir déterminée) la localisation du terminal **2** et sélectionne le lieu en fonction de celle-ci. Lorsque plusieurs lieux correspondent à un même objet dans la base de données **6,** la sélection peut consister a choisir le lieu le plus proche de la localisation du terminal **2.**

Le serveur **7** de localisation transmet alors (**106**) les coordonnées du lieu sélectionné au terminal **2**, ou initialise directement la procédure de guidage en fonction de la localisation du terminal **2**.

Selon un premier mode de réalisation, semi-automatique, les coordonnées du lieu sélectionné sont transmises puis simplement affichées sur le terminal **2**, l'opportunité d'activer la procédure de guidage sur celuì-ci étant alors laissée à l'initiative de l'utilisateur.

Selon un second mode de réalisation, automatique, en même temps que la transmission des coordonnées du lieu sélectionné, le serveur **7** de localisation active à distance sur le terminal **2** l'application de navigation du système de positionnement pour permettre un guidage vers le lieu.

Selon un troisième mode de réalisation, automatique également, les coordonnées du lieu sélectionné ne sont pas transmises au terminal **2,** le système **3** de communication gérant l'application du système de positionnement à distance en fonction de la localisation du terminal **2.**

A cet effet, l'application de navigation prend en compte la position actuelle du terminal **2**, et élabore un trajet reliant cette position et le lieu sélectionné.

Par exemple, le système **3** de communication émet à destination du terminal **2** un SMS contenant un lien qui permet d'activer la procédure de guidage à partir du lieu où l'activation est engagée.

Le trajet ainsi élaboré peut être simplement affiché sur la carte 9 à l'écran **8** du terminal **2**. En variante, l'application de navigation entame directement une procédure de guidage du terminal **2** jusqu'au lieu sélectionné, suivant le trajet ainsi élaboré.

À titre d'exemple, un utilisateur peut photographier ou filmer un logo désignant une société ou une marque de fabrique et le transmettre au système **3**, qui extrait de la base de données **6** l'adresse de la société ou du distributeur de la marque le plus proche de la localisation du terminal **2**.

Le procédé et le système qui viennent d'être décrits facilitent les opérations de guidage sur les terminaux mobiles munis de systèmes de positionnement. En effet, il n'est pas nécessaire pour l'utilisateur d'introduîre dans son terminal les coordonnées d'un lieu vers lequel il souhaite être guidé : il lui suffit de photographier ou filmer dans son environnement un objet associé à ce lieu pour bénéficier de manière automatique (ou semi-automatique, nous l'avons vu), d'un guidage vers celui-ci.

## Revendications

1. Procédé de communication comprenant les opérations suivantes ;
- Établissement d'une session média entre un terminal (**2**) mobile et un système (**3**) de communication distant comprenant une base de données (**6**) dans laquelle sont mémorisées des images d'objets ;
- Réalisation par le terminal (**2**) d'une prise de vue dans l'environnement du terminal (**2**) ;
- Transmission de la prise de vue par le terminal (**2**) mobile au système (**3**) de communication au cours de la session média ;
- Réception de la prise de vue par le système (**3**) de communication ;
- Analyse de la prise de vue, au sein du système (**3**) de communication, pour y détecter la présence d'un objet dont une image serait disponible dans la base de données (**6**) ;
- Lorsqu'un objet a été identifié par son image, identification par le système (**3**) d'au moins un lieu associé audit objet ;
- Prise en compte par le système de la localisation du terminal ;
- Sélection d'un lieu associé à l'objet en fonction de ladite localisation ;
- Activation d'une procédure de guidage à partir de cette localisation jusqu'au lieu sélectionné.

2. Procédé selon la revendication 1, dans lequel, parmi plusieurs lieux associés à l'objet, le lieu sélectionné est le lieu le plus proche de la localisation du terminal.

3. Procédé selon la revendication 1 ou 2, qui comprend une opération d'activation à distance par le système (**3**) de communication, dans le terminal (**3**), d'une application de navigation d'un système de positionnement par satellite implémenté dans le terminal (**2**).

4. Procédé selon la revendication 1, qui comprend une opération de transmission des coordonnées du lieu sélectionné au terminal (**2**).

5. Procédé selon l'une des revendications 1 à 3, dans lequel la procédure de guidage comprend une opération d'élaboration d'un trajet reliant la localisation du terminal (**2**) au lieu sélectionné.

6. Procédé selon la revendication 3, qui comprend une opération d'affichage dudit trajet sur un écran (**8**) du terminal (**2**).

7. Système (**3**) de communication comprenant ;
- une base de données (**6**) contenant une pluralité d'images à chacune desquelles est associé un lieu prédéterminé ;
- un serveur (**5**) d'applications, relié à la base de données (**6**), et configuré pour effectuer une analyse d'image d'une prise de vue reçue d'un terminal mobile (**2**) en vue d'identifier dans ladite prise de vue un objet réel correspondant à une image mémorisée dans la base de données (**6**) ;
- un serveur (**7**) de localisation relié au serveur (**5**) d'applications, configuré pour activer une procédure de guidage vers le lieu associé à ladite image.

8. Système de communication selon la revendication 6, dans lequel le serveur (**7**) de localisation est configuré pour activer à distance, dans le terminal (**2**), une application de navigation d'un système de positionnement par satellite implémenté dans le terminal (**2**).
